# FASCICULE DE BREVET EUROPEEN

(11) **EP 0 950 172 B1**
(45) Date de publication et mention de la délivrance du brevet: **03.03.2004**
(21) Numéro de dépôt: 97953960.8
(22) Date de dépôt: 29.12.1997
(51) Int. Cl.: G01L 9/00

(54) **PROCEDE DE REALISATION D'UN ELEMENT SUSPENDU DANS UNE STRUCTURE MICRO-USINEE**
VERFAHREN ZUR HERSTELLUNG EINES AUFGEHÄNGTEN ELEMENTES IN EINER MIKROMECHANISCHEN STRUKTUR
METHOD FOR PRODUCING A SUSPENDED ELEMENT IN A MICRO-MACHINED STRUCTURE

(30) Priorité: 30.12.1996 FR 9616198
(43) Date de publication de la demande: 20.10.1999
(73) Titulaire: COMMISSARIAT A L'ENERGIE ATOMIQUE, 75015 Paris (FR)
(72) Inventeur: ROBERT, Philippe, F-38120 Le Fontanil (FR); MICHEL, France, F-38360 Sassenage (FR); GRANGE, Hubert, F-38100 Grenoble (FR)
(74) Mandataire: Audier, Philippe André
(86) Numéro de dépôt international: PCT/FR1997/002437
(87) Numéro de publication internationale: WO 1998/029720

(56) Documents cités:
- US-A- 4 457 820
- US-A- 5 198 390
- PATENT ABSTRACTS OF JAPAN vol. 007, no. 186 (E-193), 16 août 1983 & JP 58 089859 A (OKI DENKI KOGYO KK), 28 mai 1983,

## Description

La présente invention concerne un procédé de réalisation d'un élément suspendu dans une structure micro-usinée. Ce procédé s'applique en particulier dans le domaine de la microélectronique pour obtenir des microcapteurs au silicium (accéléromètres, capteurs de pression, etc.) ou des microactionneurs.

Les structures micro-usinées, exploitant les propriétés mécaniques et élastiques des matériaux, comportent en général au moins un élément flexible (poutre, membrane) et sont réalisées par des attaques chimiques ou physico-chimiques. Ces attaques permettent d'isoler des éléments suspendus au sein d'une structure de même nature ou de nature différente. Ces éléments suspendus doivent être délimités dans le plan de la structure et libérés de la masse de la structure, à l'exception de leurs points d'attache, de façon à pouvoir se déplacer dans une certaine mesure par rapport au reste de la structure. On peut distinguer deux grands types de libération d'éléments suspendus.

Selon un premier type, la libération de l'élément suspendu est obtenue par gravure humide d'une couche sacrificielle. Ce procédé de libération est le plus connu et le plus utilisé. On part d'une structure comportant un substrat (par exemple en silicium) recouvert successivement d'une couche sacrificielle (par exemple en dioxyde de silicium) et d'une couche (par exemple en silicium, obtenue par dépôt ou épitaxie) dans laquelle sera élaboré l'élément suspendu. La couche sacrificielle sert d'espaceur et de couche d'adhérence. Pour obtenir l'élément suspendu, on grave la couche supérieure jusqu'au niveau de la couche sacrificielle afin de définir le motif de l'élément suspendu. La couche sacrificielle est ensuite retirée par gravure humide pour libérer l'élément suspendu. Cette méthode est simple à mettre en oeuvre et présente une grande liberté technologique. Cependant, elle présente plusieurs inconvénients qui sont énumérés ci-après. Lors de l'étape de séchage, postérieure à l'étape de gravure humide, il peut se produire un collage de l'élément suspendu sur le substrat de la structure. La mouillabilité des matériaux n'est pas toujours suffisante pour assurer un bon contact entre la solution d'attaque et la couche sacrificielle à graver surtout si cette couche sacrificielle est très fine ou si le motif gravé est très fin. Enfin, la solution d'attaque n'est pas toujours compatible avec les techniques utilisées : gravure sélective pour certains matériaux mais pas pour d'autres (par exemple l'acide fluorhydrique présente une très bonne sélectivité pour le silicium par rapport au dioxyde de silicium mais n'est pas sélectif par rapport aux métallisations) et généralement pas compatible CMOS.

Selon un deuxième type, la libération de l'élément suspendu est obtenue par gravure sèche. C'est le cas du procédé dit SCREAM (acronyme de l'expression anglaise Single-Crystal-silicon Reactive Etching And Metallization). On part d'une structure constituée par un substrat en silicium. Une première étape de ce procédé consiste à soumettre le substrat à une gravure sèche anisotrope pour définir l'élément suspendu. Lors d'une seconde étape, on dépose une couche de protection sur les flancs de gravure. Une troisième étape consiste à effectuer une gravure sèche isotrope des zones non protégées, ce qui a pour conséquence de libérer l'élément suspendu. Ce procédé ne nécessite pas la présence d'une couche sacrificielle et, mettant en oeuvre une gravure sèche, il ne peut se produire de collage de l'élément suspendu sur le substrat. Cependant, ce procédé présente les inconvénients suivants. Le fond de gravure obtenu n'est ni plan ni homogène, ce qui peut poser problème dans le cas d'une détection capacitive sous l'élément suspendu. La protection des flancs de gravure est peu contrôlée et ces flancs sont donc susceptibles d'être entamés lors de la seconde gravure. Enfin, ce procédé implique un nombre d'étapes intermédiaires importantes et sa mise en oeuvre est délicate.

L'état de la technique est encore illustré par US-A-5 198 390, où l'on réalise un élément suspendu par micro-usinage au moyen d'une technique de gravure, et par JP-A-58 089 859, qui divulgue un procédé pour former un élément suspendu par ablation locale d'une couche en silicium.

La présente invention fournit un procédé qui permet de remédier aux inconvénients présentés par la technique antérieure. Elle résulte d'une constatation faite par l'inventeur de la présente invention et présente un aspect tout à fait inattendu et surprenant.

En microélectronique, les gravures sèches se distinguent par leur rapport entre vitesse de gravure verticale Vv et vitesse de gravure latérale Vl. Si Vl=Vv, la gravure est dite isotrope. Si 0<Vl<Vv, la gravure est dite quasi isotrope. Si Vl=0 et Vv>0, la gravure est dite anisotrope.

Il a été constaté ce qui suit à partir d'essais effectués sur une structure comportant un substrat de silicium recouvert successivement d'une couche d'arrêt isolante (par exemple en SiO2, en quartz, en verre) et d'une couche épitaxiée de silicium (structure Silicium Sur Isolant ou SSI). La couche épitaxiée est masquée à l'exception d'une zone destinée à être gravée selon un motif déterminé par le masque. On procède à une gravure sèche anisotrope de la structure au moyen d'un gaz qui a une sélectivité suffisante vis-à-vis de la couche d'oxyde pour que celle-ci puisse servir de couche d'arrêt à la gravure. Lorsque la gravure débouche sur la couche d'arrêt, la vitesse de gravure verticale

s'annule alors que la vitesse de gravure latérale, au voisinage de la couche d'arrêt, devient non nulle et croît très rapidement. On passe brusquement d'un régime anisotrope (V1=0) à un régime isotrope (V1>0) localisé au niveau de l'interface couche épitaxiée-couche d'arrêt (augmentation de la proportion des espèces neutres, polarisation du substrat, etc.). Durant cette deuxième phase de gravure, les flancs du motif, passives lors de la gravure anisotrope, ne sont pas altérés. Par contre, au-dessus de la couche d'oxyde, la gravure du silicium est rapide (surface de silicium apparent très faible). On observe une vitesse de gravure latérale en régime isotrope supérieure à la vitesse de gravure verticale en régime anisotrope (environ 3 fois plus grande). La conséquence de ceci est une surgravure latérale rapide du silicium qui est adjacent à la couche d'arrêt. Cette surgravure peut être utilisée pour libérer un élément suspendu juste au-dessus de la couche d'arrêt.

L'invention a donc pour objet un procédé de réalisation d'au moins un élément suspendu, par micro-usinage, au moyen d'une technique de gravure, d'une structure comportant un substrat recouvert successivement d'une première couche, dite couche d'arrêt, réalisée en un premier matériau, et d'une deuxième couche réalisée en un deuxième matériau et dans laquelle est élaboré l'élément suspendu, caractérisé en ce que le procédé met en oeuvre une technique de gravure sèche employant un gaz dont la sélectivité permet la gravure de la deuxième couche sans attaquer la couche d'arrêt, sous des conditions établies pour permettre une gravure anisotrope du deuxième matériau, la gravure étant menée selon une première phase pour délimiter l'élément suspendu jusqu'au niveau de la couche d'arrêt et étant poursuivie selon une deuxième phase au cours de laquelle on obtient la libération de l'élément suspendu par gravure de la couche superficielle de l'élément suspendu délimité lors de la première phase et qui est adjacente à la couche d'arrêt.

De préférence, la technique de gravure sèche utilisée est du type gravure réactive.

La gravure sèche peut être réalisée dans une machine STS (Multiplex ICP) ou dans une machine Alcatel 602E.

Le procédé selon l'invention s'applique en particulier à la réalisation d'au moins un élément suspendu dans une structure où la couche d'arrêt est en dioxyde de silicium et la deuxième couche est en silicium.

L'invention sera mieux comprise au moyen de la description qui va suivre, donnée à titre d'exemple non limitatif, accompagnée des dessins annexés parmi lesquels :
- la figure 1 est une vue en perspective d'une structure du type SSI dans laquelle un élément suspendu va être réalisé en appliquant le procédé de l'invention,
- la figure 2 est une vue en coupe selon l'axe II-II de la figure 1 et montrant la structure gravée par le procédé de l'invention.

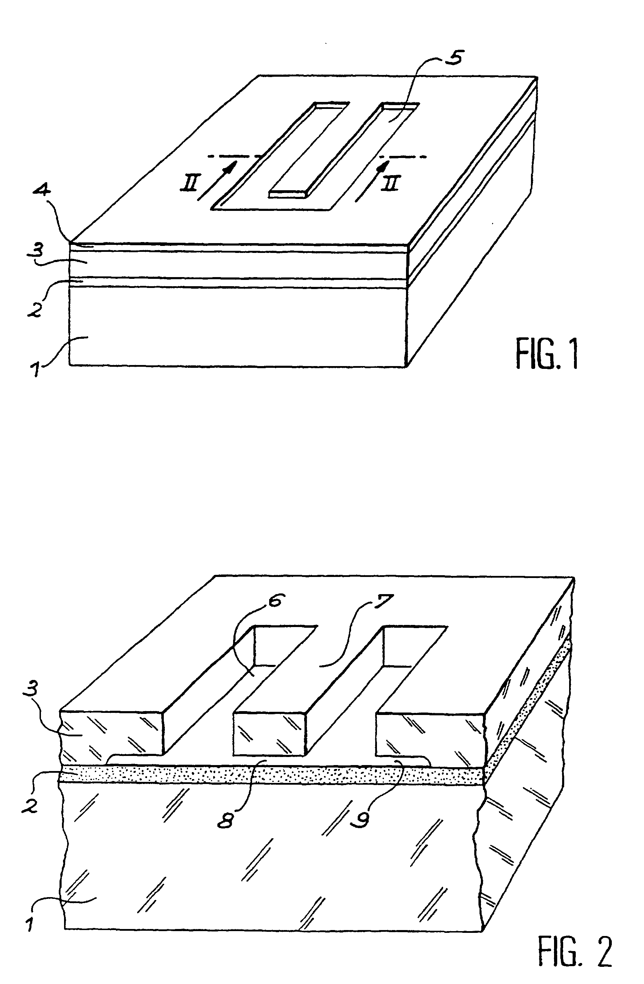

La figure 1 montre, en perspective, une structure du type SSI comprenant un substrat 1 en silicium, recouvert sur l'une de ses faces d'une couche 2 d'oxyde de silicium et d'une couche 3 de silicium déposée ou épitaxiée sur la couche 2 d'oxyde. Afin de graver, dans la couche 3 de silicium, un élément suspendu constitué par une poutre, un masque 4 est déposé sur la couche 3 de silicium. Ce masque 4 est par exemple constitué d'un film de résine photosensible ou d'une couche d'oxyde (par exemple SiO₂) et comporte une ouverture 5 en forme de U pour délimiter l'élément suspendu.

La gravure est menée dans une machine STS. Il s'agit d'une gravure réactive ou RIE (Reactive Ion Etching). Le gaz utilisé est de l'hexafluorure de soufre SF₆. On pourrait également utiliser Cl ou CHF₃O₂. La gravure est menée sous des conditions de pression et de puissance haute fréquence déterminées pour obtenir une gravure fortement anisotrope (verticale) du silicium. La couche de silicium située juste sous l'ouverture 5 du masque 4 est, selon la première phase de gravure, gravée jusqu'à la couche d'oxyde 2. La gravure se poursuit alors latéralement selon la deuxième phase de gravure juste au-dessus de la couche d'oxyde 2. La gravure est arrêtée lorsque l'élément suspendu est libéré de la couche d'oxyde.

La figure 2 montre le résultat obtenu, le masque 4 ayant été ôté. La couche 3 de silicium présente un évidement 6 délimitant un élément suspendu 7 en forme de poutre. La poutre 7, en porte-à-faux sur le reste de la couche 3, est séparée de la couche d'oxyde 2 par un espace 8 résultant de la gravure latérale de la couche superficielle de silicium reposant sur la couche 3. On constate que, au fond de l'évidement 6, le silicium superficiel à la couche 2 a aussi été attaqué vers l'extérieur pour former un espace 9 entourant l'évidement 6.

Le procédé selon l'invention permet de réaliser des éléments suspendus par gravure sèche, ce qui élimine les problèmes de mouillabilité des matériaux. On évite également les problèmes de collage de l'élément suspendu sur le reste de la structure. Ce procédé est compatible VLSI. Les flancs et le fond de la gravure sont contrôlés et propres. Un autre avantage résulte du fait que la gravure et la libération des éléments suspendus se fait au cours d'une étape commune.

Ce procédé peut avantageusement s'appliquer à la réalisation de microstructures en peigne, à la réalisation de microcapteurs (accéléromètre, capteur de pression, ...), à la réalisation de microactionneurs.

## Revendications

1. Procédé de réalisation d'au moins un élément suspendu (7), par micro-usinage, au moyen d'une technique de gravure, d'une structure comportant un substrat (1) recouvert successivement d'une première couche, dite couche d'arrêt (2), réalisée en un premier matériau, et d'une deuxième couche (3) réalisée en un deuxième matériau et dans laquelle est élaboré l'élément suspendu (7), **caractérisé en ce que** le procédé met en oeuvre une technique de gravure sèche employant un gaz dont la sélectivité permet la gravure de la deuxième couche (3) sans attaquer la couche d'arrêt (2), sous des conditions établies pour permettre une gravure anisotrope du deuxième matériau, la gravure étant menée selon une première phase pour délimiter l'élément suspendu (7) jusqu'au niveau de la couche d'arrêt (2) et étant poursuivie selon une deuxième phase au cours de laquelle on obtient la libération de l'élément suspendu (7) par gravure de la couche superficielle de l'élément suspendu délimité lors de la première phase et qui est adjacente à la couche d'arrêt (2).

2. Procédé selon la revendication 1, **caractérisé en ce que** la technique de gravure sèche utilisée est du type gravure réactive.

3. Application du procédé selon l'une quelconque des revendications 1 à 2 à la réalisation d'au moins un élément suspendu (7) dans une structure où la couche d'arrêt (2) est en dioxyde de silicium et la deuxième couche (3) est en silicium.

## Patentansprüche

1. Verfahren zur Herstellung wenigstens eines aufgehängten Elements (7) durch Mikrobearbeitung mittels einer Technik des Ätzens einer Struktur, die ein Substrat (1) umfasst, das sukzessive überzogen ist mit einer Stoppschicht genannten ersten Schicht (2), erzeugt aus einem ersten Material, und einer aus einem zweiten Material erzeugten zweiten Schicht (3), in der das aufgehängte Element (7) hergestellt wird,
**dadurch gekennzeichnet,**
**dass** das Verfahren eine Trockenätztechnik anwendet, die ein Gas benutzt, dessen Selektivität unter Bedingungen, hergestellt für das anisotrope Ätzen des zweiten Materials, das Ätzen der zweiten Schicht (3) ermöglicht ohne die Stoppschicht (2) anzugreifen, wobei man in einer ersten Phase das aufgehängte Element (7) bis zum Niveau der Stoppschicht (2) durch Ätzung abgrenzt und dann das aufgehängte Element (7) in einer zweiten Phase frei macht, indem man die an die Stoppschicht (2) angrenzende Oberflächenschicht des in der ersten Phase abgegrenzten aufgehängten Elements ätzt.

2. Verfahren nach Anspruch 1, **dadurch gekennzeichnet, dass** die benutzte Trockenätztechnik vom Typ Reaktives Ätzen ist.

3. Anwendung des Verfahrens nach einem der Ansprüche 1 und 2 zur Herstellung wenigstens eines aufgehängten Elements (7) in einer Struktur, wo die Stoppschicht (2) aus Siliciumdioxid ist und die zweite Schicht (3) aus Silicium ist.

## Claims

1. Process for making at least one suspended element (7) by using an etching technique for micro-machining a structure comprising a substrate (1) covered in sequence by a first layer called a stop layer (2) made of a first material, and a second layer (3) made of a second material in which the suspended element (7) is formed, **characterized in that** the process used is a dry etching technique using a gas with sufficient selectivity to enable etching of the second layer (3) without etching the stop layer (2), under conditions defined to enable anisotropic etching of the second material, the etching being carried out according to a first phase to delimit the suspended element (7) as far as the level of the stop layer (2) and being continued in a second phase during which the suspended element (7) is released by etching of the surface layer of the suspended element delimited in the first phase and which is adjacent to the stop layer (2).

2. Process according to claim 1, **characterized in that** the dry etching technique used is a reactive etching type.

3. Application of the process according to any one of claims 1 to 2, to the production of at least one suspended element (7) in a structure in which the stop layer (2) is made of silicon dioxide and the second layer (3) is made of silicon.
